# EUROPÄISCHE PATENTANMELDUNG

(11) **EP 4 309 780 A1**
(43) Veröffentlichungstag der Anmeldung: **24.01.2024**
(21) Anmeldenummer: 22020348.3
(22) Anmeldetag: 20.07.2022
(51) Int. Cl.: B01J 8/06, F28D 7/16, F28F 9/04, F28D 21/00

(54) **ROHRBODEN FÜR EINEN ROHRREAKTOR UND REAKTOR MIT EINEM SOLCHEN ROHRBODEN**

(71) Anmelder: Linde GmbH, 82049 Pullach (DE)
(72) Erfinder: Mihailowitsch, Dieter, 82049 Pullach (DE); Stefanescu, Adriana, 82049 Pullach (DE); Herzog, Robert, 82049 Pullach (DE)
(74) Vertreter: Fischer, Werner

(57) **Zusammenfassung**

Die Erfindung betrifft einen Rohrboden (140) für einen Rohrreaktor (100), wobei der Rohrreaktor (100) einen Reaktormantel (120) und einen Reaktorkopf (110) aufweist, wobei der Rohrboden (140) einen Zentralbereich mit Rohraufnahmen zur Aufnahme von Reaktorrohren (130) und einen Randbereich mit einem Anschlussstück (141) zum, insbesondere befestigungsfreien, Verbinden des Rohrbodens (140) mit dem Reaktormantel (120) umfasst, dadurch gekennzeichnet, dass das Anschlussstück (141) nicht in einer Ebene mit dem Zentralbereich ausgebildet ist. Ferner wird ein Reaktor (100) mit zumindest einem solchen Rohrboden (140) vorgeschlagen.

## Beschreibung

Die Erfindung betrifft einen Rohrreaktor und einen Rohrboden für einen solchen Reaktor.

### Hintergrund der Erfindung

In Rohrreaktoren werden typischerweise Rohrböden eingesetzt, die die einzelnen Reaktorrohre aufnehmen und so eine Verteilung eines in einen Reaktorkopf eingebrachten Eduktstroms auf die einzelnen Reaktorrohre, die sich typischerweise entlang einer Achse des Reaktors innerhalb eines Reaktormantels erstrecken, zu ermöglichen. In Reaktoren, die bei hohen Temperaturen betrieben werden, insbesondere bei Temperaturen über 300 °C, 400 °C, 500 °C, 700 °C oder über 900 °C, kann der Rohrboden gegenüber einer die Reaktorrohre umgebenden Atmosphäre thermisch isoliert ausgestaltet sein, um zu starke thermische Belastungen, insbesondere durch temperaturinduzierte mechanische Spannungen, zu vermeiden.

Dabei sind - unabhängig von der konkreten Ausgestaltung des Reaktors - folgende Problemfelder von Bedeutung:
- Dichtheit des Reaktorkopfes gegenüber dem Reaktormantel, um eine Leckage des Eduktstroms in die die Reaktorrohre umgebende Atmosphäre innerhalb des Reaktormantels zu vermeiden;
- Auswahl geeigneter Materialien, insbesondere um Materialabtrag zu vermeiden;
- Kompatibilität unterschiedlicher Materialien miteinander, insbesondere zwischen Rohrboden und äußerer Reaktorhülle und/oder zwischen Rohrboden und Reaktorrohren;
- Temperaturgradienten zwischen Eingangs- und Ausgangsseite des Rohrbodens;
- Mechanische Belastung, insbesondere durch Masse der Reaktorrohre und Druckdifferenz zwischen den eingesetzten Medien;
- Thermische Ausdehnung des Rohrbodens relativ zu einem innen isolierten Reaktormantel;
- Daraus resultierend: Lokale Konzentration von Materialbeanspruchung.

Daraus ergibt sich die Aufgabe, Rohrböden und Rohrreaktoren so zu verbessern, dass sie diesen Herausforderungen gewachsen sind.

### Offenbarung der Erfindung

Diese Aufgabe wird dadurch einen Rohrboden und ein Reaktor gemäß den unabhängigen Patentansprüchen gelöst. Vorteilhafte Weiterbildungen und Ausgestaltungen sind Gegenstande der jeweils abhängigen Ansprüche sowie der nachfolgenden Beschreibung.

Die Erfindung bedient sich insbesondere eines Rohrbodens, der nicht fest mit der Außenhülle des Reaktors verbunden ist und daher ein gewisses Maß an Bewegung zulässt, um thermischen Spannungen und damit einhergehender Materialermüdung vorzubeugen.

Im Einzelnen wird ein erfindungsgemäßer Rohrboden für einen Rohrreaktor vorgesehen, wobei der Rohrreaktor einen Reaktormantel und einen Reaktorkopf aufweist, wobei der Rohrboden einen Zentralbereich mit Rohraufnahmen zur Aufnahme von Reaktorrohren und einen Randbereich mit einem Anschlussstück zum Verbinden des Rohrbodens mit dem Reaktormantel umfasst, wobei das Anschlussstück zum größeren Teil nicht in einer Ebene mit dem Zentralbereich ausgebildet ist, also zu mindestens 50%, vorzugsweise zu mindestens 75%, weiter bevorzugt zu mindestens 80 - 90% oder vollständig nicht in der durch den Zentralbereich definierten Ebene angeordnet ist. Die thermische Ausdehnung des Zentralbereichs wird dadurch nicht direkt auf das Anschlussstück übertragen und daher teilweise kompensiert.

Insbesondere ist das Anschlussstück zumindest teilweise konisch ausgebildet. Dadurch kann eine thermische Ausdehnung des Zentralbereichs, die in radialer Richtung wirkt, in dem Anschlussstück zumindest teilweise in eine Verformung umgewandelt werden, so dass die thermische Ausdehnung nicht zur Gänze in eine mechanische Belastung des Reaktormantels umgesetzt wird. Die konische Ausgestaltung des Anschlussstücks wirkt somit gleichsam wie eine Blattfeder.

Das Anschlussstück kann vorteilhafterweise zur Aufnahme zwischen einer Isolierung des Reaktormantels und einer Isolierung eines Reaktorkopfes ausgebildet sein. Dadurch werden die Isolierungswirkung und die Dichtheit der Komponenten gegeneinander nicht beeinträchtigt.

Das Anschlussstück weist vorteilhafterweise zumindest eine Anschlussvorrichtung auf, die zum Zusammenwirken mit einer Anschlussvorrichtung des Reaktormantels eingerichtet ist. So kann ein Umströmen des Rohrbodens durch den einen Eduktstrom sicher verhindert werden.

Bevorzugt erfolgt dabei das Zusammenwirken der Anschlussvorrichtung des Anschlussstückes mit der Anschlussvorrichtung des Reaktormantels befestigungsfrei ineinander eingreifend, mit anderen Worten schwimmend zueinander gelagert (engl.: "floatingly supported"). Insbesondere sind dementsprechend keine Verschraubungen, Vernietungen, Verschweißungen, Verklebungen oder andere dauerhafte oder lösbare Befestigungen zwischen Rohrboden einerseits und Reaktormantel bzw. Reaktorkopf andererseits vorgesehen. Dies erleichtert ein allfälliges Austauschen der Reaktorrohre mitsamt dem Rohrboden, da dazu keine festen Verbindungen gelöst zu werden brauchen. Zudem vermindert eine derartige Ausgestaltung lokale mechanische Belastungsspitzen. Beispielsweise können die Anschlussvorrichtungen von Rohrboden einerseits und Reaktormantel andererseits so ausgestaltet sein, dass sie ein Einhängen des Rohrbodens in den (in diesem Beispielfall senkrecht stehenden) Reaktormantel ermöglichen.

Ein erfindungsgemäßer Reaktor weist einen Reaktormantel, einen Reaktorkopf und zumindest einen Rohrboden auf, der wie oben beschrieben beschaffenen ist. Daher profitiert der erfindungsgemäße Reaktor von den Vorteilen eines erfindungsgemäßen Rohrbodens sinngemäß entsprechend.

Insbesondere sind in dem Reaktormantel Reaktorrohre angeordnet, die sich von dem Rohrboden ausgehend parallel zu einer Reaktorachse über zumindest 30%, 50%, 70%, 80%, 90% bis zu 100% einer Länge des Reaktormantels erstrecken. Damit lässt sich eine effiziente Wärmeübertragung sicherstellen.

Vorteilhafterweise ist innerhalb und/oder außerhalb der Reaktorrohre ein Katalysator angeordnet, der zur Katalyse zumindest einer chemischen Reaktion ausgebildet ist, wobei die chemische Reaktion insbesondere zur Herstellung einer oder mehrerer Verbindungen, die die Gruppe aus Methan, Wasserstoff, Synthesegas (z.B. ein Gemisch aus Wasserstoff und/oder Methan und/oder Kohlenstoffmonoxid und ggf. weiteren Bestandteilen), Methanol, Ethanol und Dimethylether bilden, geeignet ist. Dies senkt die erforderlichen Temperaturen und erlaubt eine selektivere Reaktionsführung mit insgesamt erhöhter Prozessausbeute.

Der Reaktormantel und/oder der Reaktorkopf weisen bevorzugt jeweils an einer Innenwand eine gegenüber erhöhter Temperatur und/oder gegenüber Chemikalien beständige Isolierung auf. Dies steigert einerseits die Energieeffizienz beim Betrieb des Reaktors und erhöht andererseits dessen Lebensdauer bzw. senkt Anforderungen an die Stabilität der eingesetzten Materialien.

Der Rohrboden ist in dem Reaktor bevorzugt befestigungsfrei mit dem Reaktormantel und/oder dem Reaktorkopf eingreifend angeordnet. Damit ist ein Austausch der Reaktorrohre mitsamt dem Rohrboden (und gegebenenfalls darin enthaltenem Katalysator) erleichtert. Es ist in diesem Zusammenhang anzumerken, dass in der Regel die Reaktorrohre und der Katalysator eine deutlich geringere Standzeit aufweisen, als dies für die Reaktorhülle, also Reaktormantel und -kopf (sowie ggf. Reaktorsumpf) der Fall ist. Eine solche erleichterte Austauschbarkeit beeinflusst somit auch die Investitions- bzw. Instandhaltungskosten bezüglich des Reaktors positiv.

Die Vorteile, die hier in Bezug auf einen Rohrboden, der an einer Schnittstelle zwischen Reaktorkopf und -mantel lokalisiert ist, diskutiert sind, gelten selbstverständlich sinngemäß entsprechend für einen Rohrboden, der an einer Schnittstelle zwischen Reaktormantel und -sumpf angeordnet ist.

### Kurze Beschreibung der Figuren

Figur 1 zeigt eine schematische Schnittdarstellung eines erfindungsgemäßen Rohrreaktors.
Figur 2 zeigt eine Detailansicht der schematischen Schnittdarstellung aus Figur 1.

### Ausführungsform(en) der Erfindung

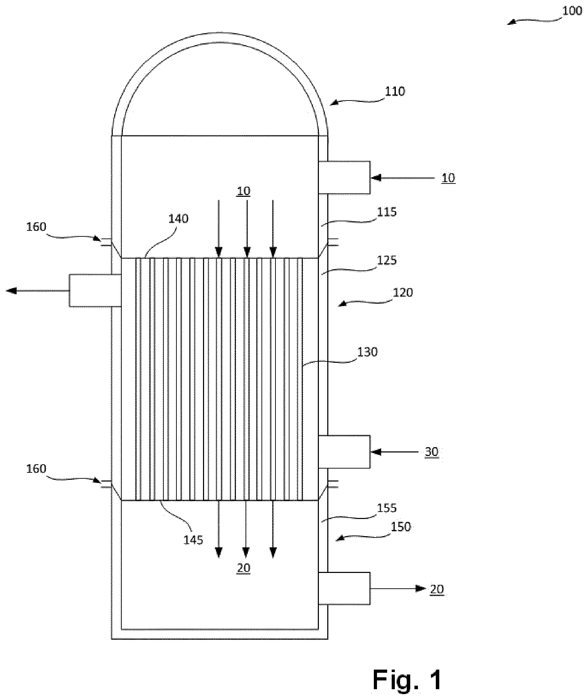

In Figur 1 ist ein erfindungsgemäßer Rohrreaktor schematisch anhand einer Schnittdarstellung gezeigt und insgesamt mit 100 bezeichnet.

Der Rohrreaktor 100, auch kurz als Reaktor 100 bezeichnet, umfasst einen Reaktorkopf 110 und einen Reaktormantel 120, der Reaktorrohre 130 in sich aufnimmt. Die Reaktorrohre 130 stehen eingangsseitig mit einem inneren Volumen des Reaktorkopfes 110 in Fluidverbindung, während ein inneres Volumen des Reaktormantels 120 (die die Reaktorrohre 130 umgebende Atmosphäre) durch einen Rohrboden 140 von dem inneren Volumen des Reaktorkopfes 110 getrennt ist.

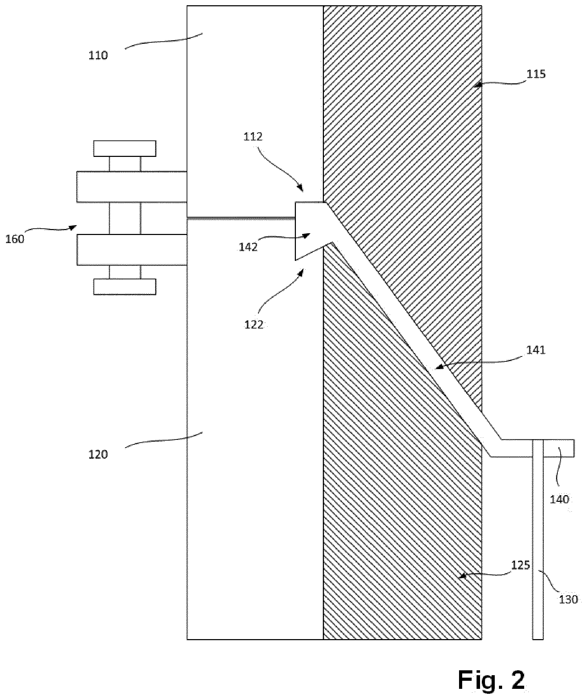

Die Anordnung von Reaktorkopf 110, Reaktormantel 120, Reaktorrohren 130 und Rohrboden 140 relativ zueinander ist in Figur 2 ausschnittsweise detaillierter dargestellt.

Im Betrieb des Reaktors 100 wird kopfseitig ein Eduktstrom 10 zugeführt, der sich auf die Reaktorrohre 130 aufteilt und darin, insbesondere mittels eines darin enthaltenen Katalysators, zumindest teilweise zu einem Produkt umgesetzt werden, das ausgangsseitig als Produktstrom 20 entnommen wird. Zur Temperatur- bzw. Wärmesteuerung kann ein Wärmeträgerfluid 30 um die Rohre 130 geleitet werden. In bestimmten Ausgestaltungen kann dieses Fluid unter Verwendung des Eduktstroms 10 und/oder des Produktstroms 20 gebildet werden.

In dem in Figur 1 dargestellten Beispiel schließt sich an der kopfabgewandten Seite des Reaktormantels 120 ein Reaktorsumpf 150 an, der von dem die Reaktorrohre 130 umgebenden inneren Volumen des Reaktormantels 120 durch einen weiteren Rohrboden 145, der dem Rohrboden 140 konstruktiv im Wesentlichen entspricht, getrennt ist und somit eine Sammlung der die Reaktorrohre 130 verlassenden Produktströme 20 ermöglicht.

In dem hier betrachteten Beispiel sind Reaktorkopf und -mantel, sowie Reaktormantel und -sumpf jeweils mittels einer Flanschverbindung 160 miteinander verbunden und jeweils an einer Innenwand mit einer thermischen Isolierung 115, 125 bzw. 155 versehen.

Der Rohrboden 140 (ebenso wie der in dem gezeigten Beispiel verwendete untere Rohrboden 145) weist ein Anschlussstück 141 auf, das nicht mit dem die Reaktorrohre 130 aufnehmenden Zentralbereich in einer Ebene angeordnet ist. In dem gezeigten Beispiel ist das Anschlussstück 141 konisch ausgebildet und zwischen den Isolierungen 115, 125 von Reaktorkopf 110 und Reaktormantel 120 (bzw. zwischen den Isolierungen 125, 155 des Reaktormantels 120 und -sumpfes 150) aufgenommen und zur Innenwand geführt. Dies ist in Figur 2 (für den Bereich zwischen Reaktorkopf 110 und Reaktormantel 120) detaillierter dargestellt.

In dem in Fig. 2 dargestellten Beispiel ist die Flanschverbindung 160 zwischen Reaktorkopf 110 und Reaktormantel 120 mittels Schrauben oder Bolzen gesichert. Dies stellt jedoch lediglich ein Beispiel für mögliche Verbindungssicherungen dar, andere Möglichkeiten könne ebenso in Betracht gezogen werden und sollen durch dieses Beispiel nicht ausgeschlossen werden.

Die Isolierungen 115, 125 von Reaktorkopf 110 und -mantel 120 sind an der Schnittstelle zwischen den beiden Komponenten konisch endend ausgestaltet, so dass das Anschlussstück 141 des Rohrbodens 140 dazwischen aufgenommen werden kann. Das Anschlussstück 141 weist an seinem radial äußeren Ende eine Anschlussvorrichtung 142 auf, die zum Zusammenwirken mit einer Anschlussvorrichtung 122 des Reaktormantels 120 bzw. mit einer Anschlussvorrichtung 112 des Reaktorkopfes 110 ausgebildet ist. Diese Zusammenwirkung ist derart ausgestaltet, dass ein befestigungsfreies Eingreifen ermöglicht wird, so dass beispielsweise (bei geodätisch senkrechter Ausrichtung des Reaktormantels 120 unterhalb des Reaktorkopfes 110) der Rohrboden 140 mittels seiner Anschlussvorrichtung 142 in die Anschlussvorrichtung 122 des Reaktormantels 120 eingehängt werden kann. Analog dazu kann auch der Reaktorkopf 110, wie dargestellt, eine derartige Anschlussvorrichtung 112 aufweisen, die ihrerseits mit der Anschlussvorrichtung 142 des Rohrbodens 140 dergestalt zusammenwirkt, dass deren Bewegungsfreiheit nach oben hin begrenzt wird und so ein Abheben der Anschussvorrichtung 142 des Rohrbodens von der Anschlussvorrichtung 122 des Reaktormantels 120 verhindert wird.

Die Isolierungen 115, 125 liegen beidseitig an dem Anschlussstück 141 an, so dass eine Wärmebrücke vom Reaktorinnenvolumen zu dessen Wand vermieden wird. Die konische Ausgestaltung trägt dazu bei, den Wärmefluss zu minimieren, da die zu überwindende Strecke dadurch erhöht wird. Ferner trägt die von außen nach innen abfallende Ausgestaltung dazu bei, Fluide, die beispielsweise an der relativ kalten Reaktorhülle kondensieren könnten, innerhalb der Isolierung zu halten, da sich ein Rücklauf automatisch durch die Gravitation ergibt. Allerdings ist die Ausgestaltung des Anschlussstückes 141 nicht zwingend auf eine nach innen abfallende Orientierung beschränkt, je nach konkretem Anwendungsfall können auch andere Ausgestaltungen vorteilhaft sein.

Ein besonders wichtiger Vorteil der Anordnung des Anschlussstücks 141 nicht in einer Ebene mit dem Zentralbereich des Rohrbodens 140 ist die Möglichkeit thermische Spannungen, die sich durch Erhitzung und damit einhergehender lateraler Ausdehnung des Rohrbodens 140 ergeben, nicht an die Reaktoraußenwand zu übertragen, sondern bereits in dem Anschlussstück 141 selbst abzubauen, insbesondere durch Verformung des Anschlussstücks 141. Um dabei die Wirkung der Isolierung 115, 125 nicht zu beeinträchtigen können Isoliermatten (z.B. thermisch stabile Fasermatten) entlang des Anschlussstücks 141 vorgesehen sein, die eine eventuell durch Verformung entstehende Lücke zwischen Anschlussstück 141 und Isolierung 115 bzw. 125 schließen können.

Es versteht sich, dass die in den Figuren gezeigten Ausführungsformen lediglich Beispiele für vorteilhafte Anwendungen der Erfindung darstellen. Andere Ausgestaltungen können ebenso vorteilhaft sein, beispielsweise kann das Anschlussstück auch anders als hier dargestellt ausgestaltet sein, z.B. in Form eines Metallbalges oder anderen zumindest teilweise außerhalb der Ebene des Zentralbereichs des Rohrbodens 140 liegender Bauteile, die eine gewisse Verformung zulassen.

Die Isolierungen 115, 125, 155 können beispielsweise aus Matten keramischer Fasern (engl.: ceramic fibre blankets) oder aus jedem anderen geeigneten Material gefertigt sein.

Die Reaktorrohre 130 können, wie bereits erwähnt, zwischen zwei im Wesentlichen gleichartigen Rohrböden 140, 145 aufgenommen sein oder auch nur von dem oberen Rohrboden 140 ausgehend direkt in dem Reaktormantel 120 münden, so dass dieser die Funktion des Reaktorsumpfes 150 mit übernimmt. Letztere Anordnung ist insbesondere für Reaktionen vorteilhaft, die die notwendige Wärme selbst erzeugen, also zumindest eine exotherme Reaktion umfassen.

## Patentansprüche

1. Rohrboden (140) für einen Rohrreaktor (100), wobei der Rohrreaktor (100) einen Reaktormantel (120) und einen Reaktorkopf (110) aufweist, wobei der Rohrboden (140) einen Zentralbereich mit Rohraufnahmen zur Aufnahme von Reaktorrohren (130) und einen Randbereich mit einem Anschlussstück (141) zum Verbinden des Rohrbodens (140) mit dem Reaktormantel (120) umfasst, **dadurch gekennzeichnet, dass** das Anschlussstück (141) zum größeren Teil nicht in einer Ebene mit dem Zentralbereich ausgebildet ist.

2. Rohrboden (140) nach Anspruch 1, wobei das Anschlussstück (141) zumindest teilweise konisch ausgebildet ist.

3. Rohrboden (140) nach Anspruch 1 oder 2, wobei das Anschlussstück (141) zur Aufnahme zwischen einer Isolierung (125) des Reaktormantels (120) und einer Isolierung (115) des Reaktorkopfes (110) ausgebildet ist.

4. Rohrboden (140, 145) nach einem der Ansprüche 1 bis 3, wobei das Anschlussstück (141) zumindest eine Anschlussvorrichtung (142) aufweist, die zum Zusammenwirken mit einer Anschlussvorrichtung (122, 112) des Reaktormantels (120) und/oder des Reaktorkopfes (110) bzw. eines Reaktorsumpfes (150) eingerichtet ist.

5. Rohrboden (140, 145) nach Anspruch 4, wobei das Zusammenwirken der Anschlussvorrichtung (142) des Anschlussstückes (141) mit der Anschlussvorrichtung (122) des Reaktormantels (120) befestigungsfrei ineinander eingreifend erfolgt.

6. Reaktor (100) mit einem Reaktormantel (120), einem Reaktorkopf (110) und zumindest einem Rohrboden (140, 145) nach einem der Ansprüche 1 bis 5.

7. Reaktor (100) nach Anspruch 6, wobei in dem Reaktormantel (120) Reaktorrohre (130) angeordnet sind, die sich von dem Rohrboden (140) ausgehend parallel zu einer Reaktorachse über zumindest 30%, 50%, 70%, 80%, 90% bis zu 100% einer Länge des Reaktormantels (120) erstrecken.

8. Reaktor (100) nach Anspruch 6 oder 7, wobei innerhalb und/oder außerhalb der Reaktorrohre (130) ein Katalysator angeordnet ist, der zur Katalyse zumindest einer chemischen Reaktion ausgebildet ist, wobei die chemische Reaktion insbesondere zur Herstellung einer oder mehrerer Verbindungen, die die Gruppe aus Methan, Methanol, Wasserstoff, Synthesegas, Ethanol und Dimethylether bilden, geeignet ist.

9. Reaktor (100) nach einem der Ansprüche 6 bis 8, wobei der Reaktormantel (120) und/oder der Reaktorkopf (110) und/oder ein bzw. der Reaktorsumpf (150) jeweils an einer Innenwand eine gegenüber erhöhter Temperatur und/oder gegenüber Chemikalien beständige Isolierung (115, 125, 155) aufweisen.

10. Reaktor (100) nach einem der Ansprüche 6 bis 9, wobei der Rohrboden (140, 145) befestigungsfrei mit dem Reaktormantel (120) und/oder dem Reaktorkopf (110) und/oder einem bzw. dem Reaktorsumpf (150) eingreifend angeordnet ist.
